# EUROPÄISCHE PATENTSCHRIFT

(11) **EP 2 574 424 B1**
(45) Veröffentlichungstag und Bekanntmachung des Hinweises auf die Patenterteilung: **04.06.2014**
(21) Anmeldenummer: 12186301.3
(22) Anmeldetag: 27.09.2012
(51) Int. Cl.: B23Q 11/10, B05B 7/16

(54) **Verfahren zur Kühlung von Aerosolen**
Method for cooling aerosols
Procédé de refroidissement d'aérosols

(30) Priorität: 29.09.2011 DE 102011083666
(43) Veröffentlichungstag der Anmeldung: 03.04.2013
(73) Patentinhaber: Rother Technologie GmbH & Co. KG, 72574 Bad Urach (DE)
(72) Erfinder: Rother, Reiner, 72574 Bad Urach (DE)
(74) Vertreter: Kohler Schmid Möbus

(56) Entgegenhaltungen:
- EP-A1- 2 256 062
- EP-A2- 0 476 705
- GB-A- 548 630

## Beschreibung

Aerosole werden häufig zur Kühlung von Werkzeugen an Werkzeugmaschinen eingesetzt. Das Aerosol ist ein Gemisch aus einem Transportgas und fein darin verteilten Flüssigkeitströpfchen, wobei als Flüssigkeit in der Regel Öl eingesetzt wird. Es bildet auf dem Werkzeug eine so genannte Minimalmengenschmierung aus. Die Menge des Aerosols bestimmt, wie stark die Kühlung des Werkzeugs ist. Die Kühlung wird dabei durch die sich auf dem Werkzeug absetzende Flüssigkeit bestimmt. Bei schwierigen Zerspanungsaufgaben ist eine starke Kühlung des Werkzeugs erforderlich, was eine entsprechend große Menge an Aerosol erfordert.

Aerosole stellen jedoch eine Belastung für die Umwelt dar, sodass eine Erhöhung der Aerosolmenge ökologisch problematisch ist und höhere Entsorgungskosten bedeutet. Zur Verringerung dieser Probleme wird vereinzelt eine Kühlung der Aerosolzuführungen vorgenommen, sodass insgesamt weniger Aerosol am Werkzeug benötigt wird.

Die GB 548,630 zeigt ein Verfahren zur Kühlung von Aerosolen, wobei das Kühlmedium und das Aerosol nicht vermischt werden.

Der vorliegenden Erfindung liegt die Aufgabe zugrunde, ein effektives Kühlverfahren für Aerosole bereitzustellen, das umweltfreundlich und auch an bestehenden Werkzeugmaschinen einsetzbar ist.

Die Aufgabe wird gelöst mit einem Verfahren zur Kühlung von Aerosolen, das dadurch gekennzeichnet ist, dass das Aerosol zunächst durch ein flüssiges Kühlmedium indirekt durch Hindurchleiten des Aerosols und des Kühlmediums in benachbarten Führungen gekühlt wird, bevor eine Vermischung des Aerosols mit dem Kühlmedium erfolgt.

Durch diese zweistufige Kühlung des Aerosols kann das Aerosol auf Temperaturen bis -70° abgekühlt werden. Dabei kann das Kühlmedium in mindestens eine Kühlleitung eingespeist werden, die innerhalb einer Aerosolführung verläuft, und am Ende der Aerosolführung das Aerosol mit dem Kühlmedium vermischt werden. Bei dieser Ausgestaltung des Verfahrens lassen sich bestehende Werkzeugmaschinen nachrüsten, indem in die bestehende Aerosolführung mindestens eine Leitung für das Kühlmittel eingeführt wird.

Zur Erhöhung der Effektivität des Verfahrens kann das Kühlmedium in zwei Kühlleitungen eingespeist werden, die innerhalb eines Aerosolrohres oder -schlauches verlaufen. Durch die Verwendung zweier Kühlmittelleitungen vergrößert sich die Kontaktfläche zwischen Kühlmedium und Aerosol, wodurch die indirekte Kühlung des Aerosols deutlich verbessert wird. Die Verteilung des flüssigen Kühlmittels auf die beiden Leitungen kann beispielsweise mittels Magnetschaltventilen erfolgen.

Zur Vermischung des Aerosols mit dem Kühlmedium kann eine parallele Expansionsdüse eingesetzt werden. Diese kann am Ende der Aerosolführung angeordnet werden, sofern das Werkzeug von außen gekühlt wird.

Wird das Aerosol dagegen durch die Werkzeugspindel einer Werkzeugmaschine hindurchgeführt, können das Aerosol und das Kühlmedium in einem Werkzeugspanner der Werkzeugmaschine miteinander vermischt werden. Dadurch wird das Werkzeug direkt gekühlt.

Das Aerosol und das Kühlmedium können mittels eines in einen Werkzeughalter einsetzbaren Übergaberohres mit benachbarten Kanälen für das Aerosol und das Kühlmittel auch getrennt an ein Werkzeug übergeben werden. Eine Vermischung des Aerosols mit dem Kühlmittel erfolgt dann erst am Werkzeug.

Dabei ist es auch möglich, das Kühlmittel und das Aerosol in benachbarten Kanälen durch ein Bohr- oder Fräswerkzeug hindurch zu führen. Erst nach Austritt des Aerosols und des Kühlmittels aus dem Werkzeug kommt es bei dieser Lösung zu einer Vermischung der beiden Substanzen auf der Werkzeugaußenseite.

Als Kühlmedium können verschiedene Flüssigkeiten eingesetzt werden. Als besonders effektiv haben sich dabei flüssiges CO2 und Stickstoff herausgestellt.

Im Folgenden werden zwei bevorzugte Ausgestaltungen eines erfindungsgemäßen Verfahrens anhand der Zeichnung näher erläutert.

Es zeigen:
- Fig. 1: eine schematische Darstellung einer Aerosolkühlung für externe Zuführung des Aerosols zu einem Verbraucher;
- Fig. 2: eine schematische Darstellung einer Aerosolkühlung bei interner Zuführung des Aerosols zu einem Werkzeug;
- Fig. 3: eine schematische Darstellung einer zweiten Art der Aerosolkühlung bei interner Zuführung des Aerosols zu einem Werkzeug;
- Fig. 4a, b: Ansichten eines Übergaberohres für Aerosol und ein Kühlmittel zu einem Werkzeug;
- Fig. 5a, b: Ansichten eines Spiralbohrers mit internen Kanälen für Aerosol und ein Kühlmittel.

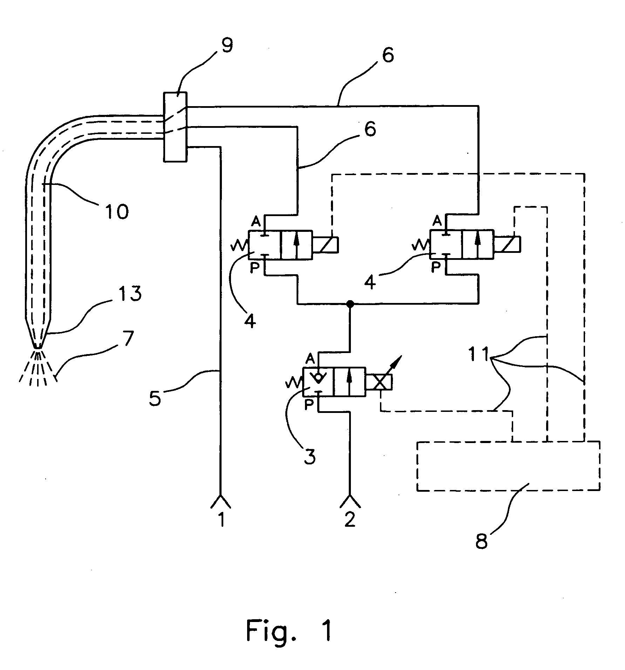

Beim in Fig. 1 dargestellten Verfahren wird Aerosol 1 über eine Aerosolleitung 5 und einen Adapter 9 einem Aerosolschlauch 10 zugeführt. Innerhalb des Aerosolschlauches sind zwei Kühlleitungen 6 geführt, die am Eingang des Schlauches 10 vom Adapter 9 gehalten sind. In die Kühlleitungen 6 wird außerhalb des Schlauches 10 ein flüssiges Kühlmittel 2 zugeführt. Das Kühlmittel 2 wird dabei zunächst von einem Proportionalregelventil 3 in der gewünschten Dosierung auf zwei Magnetschaltventile 4 geleitet, die das Kühlmittel abwechselnd oder gemeinsam in die beiden Kühlleitungen 6 einspeisen.

Sowohl das Proportionalregelventil 3 als auch die Magnetschaltventile 4 werden von einer elektrischen Steuerung 8 über elektrische Leitungen 11 angesteuert.

Das durch die Leitungen 6 in den Schlauch 10 eingeführte Kühlmittel kühlt das die Kühlleitungen 6 im Schlauch 10 umströmende Aerosol indirekt vor, bevor am Ausgang des Schlauches 10 das Aerosol mit dem Kühlmittel vermischt wird. Es entsteht dadurch gekühltes Aerosol 7, das beispielsweise zur Kühlung eines Werkzeugs (nicht dargestellt) eingesetzt werden kann.

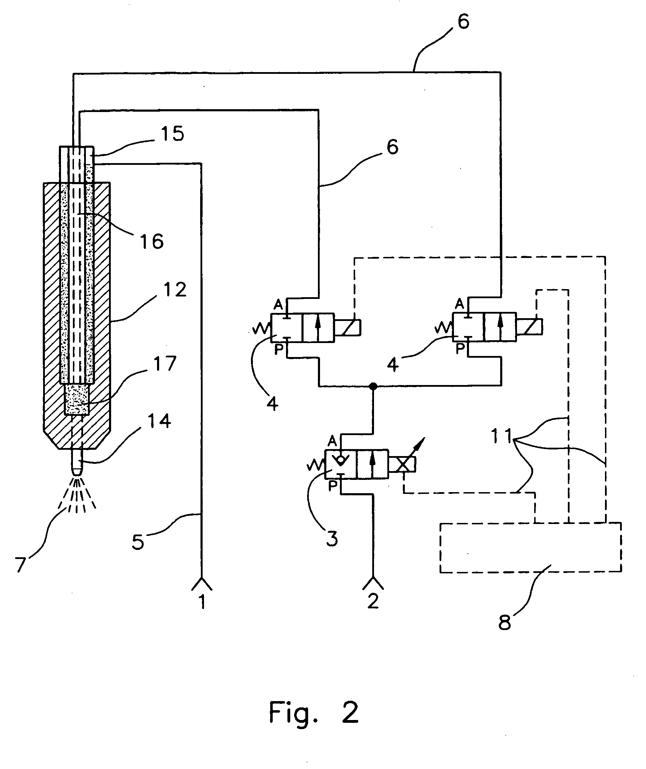

Beim in Fig. 2 gezeigten Verfahren wird ein Kühlmittel 2 in analoger Weise wie beim Verfahren in Fig. 1 über ein Proportionalventil 3 zunächst dosiert und dann über zwei Magnetschaltventile 4 abwechselnd oder gemeinsam in zwei Kühlleitungen 6 eingespeist. Die Kühlleitungen 6 werden bei diesem Verfahren durch eine Drehdurchführung 15 einer Spindel 12 einer Werkzeugmaschine (nicht dargestellt) durch ein rotierendes oder ein stationäres Deflektorrohr 16 hindurch zu einem Werkzeugspanner 17 geleitet. Gleichzeitig wird Aerosol 1 über eine Leitung 5 zur Drehdurchführung 13 und in die Spindel 12 geleitet , wo es das Deflektorrohr 16 von außen umströmt und dadurch zunächst durch das Kühlmedium indirekt vorgekühlt wird, bevor es im Werkzeugspanner 17 am Ende des Deflektorrohres 16 zu einer Vermischung von Aerosol 1 und Kühlmittel 2 und damit zu einer direkten Kühlung des Aerosols kommt. An der Spitze des im Werkzeugspanner 17 gespannten Werkzeugs 14 kann dadurch das gekühlte Aerosol 7 austreten.

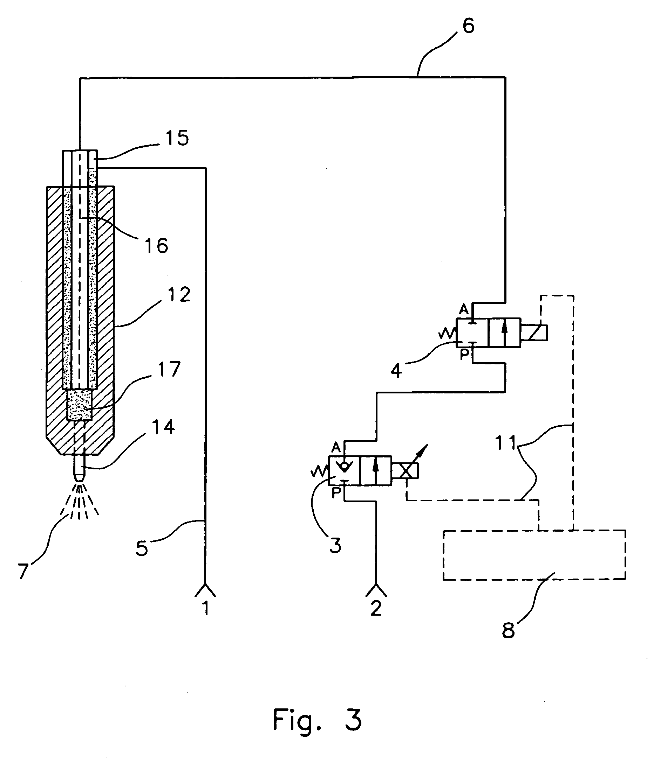

Fig. 3 zeigt eine Variante des in Fig. 2 gezeigten Verfahrens. Es ist hier nur ein Magnetschaltventil 4 zur Zuleitung des durch das Proportionalventil dosierten Kühlmittels 2 zu einer Kühlleitung 6 vorgesehen. Die Kühlleitung 6 ist durch eine Drehdurchführung 15 einer Werkzeugspindel 12 zu einem zentralen Deflektorrohr 16 geführt, das an einem Werkzeugspanner 17 endet. Das über die Leitung 5 zugeführte Aerosol umströmt das zentrale Deflektorrohr 16.

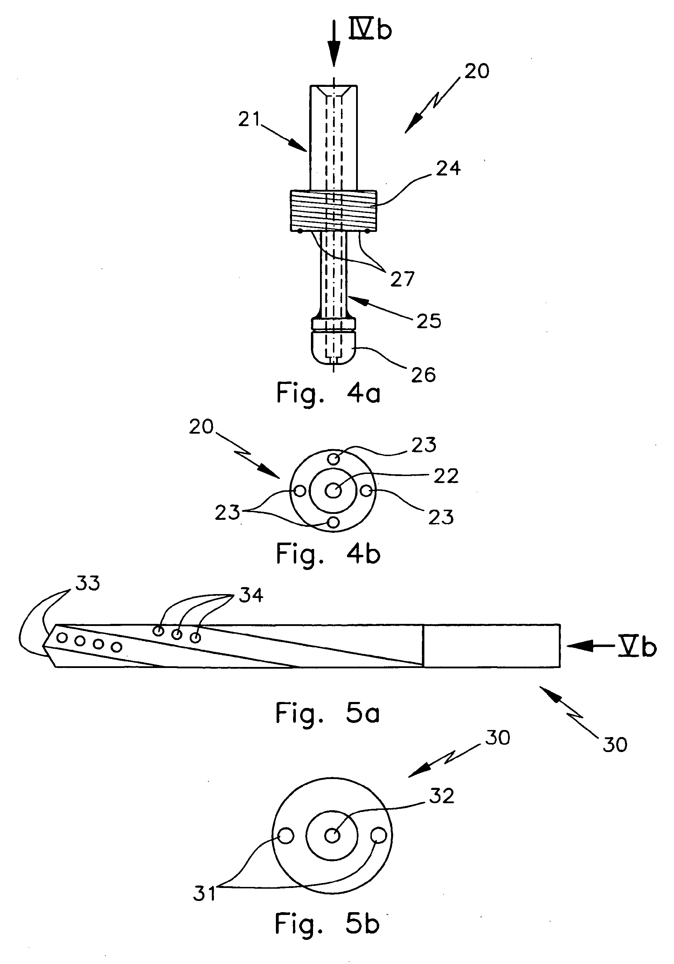

Die Fig. 4a und 4b zeigen ein Übergaberohr 20, das in einen hier nicht näher dargestellten HSK-Werkzeughalter eingeschraubt werden kann. Das Übergaberohr 20 weist ein oberes Rohrstück 21 auf, an das die Kühlmittel- und Aerosolleitungen 5, 6 aus den Fig. 1 bis 3 angeschlossen werden können. Wie insbesondere Fig. 4b verdeutlicht, weist das Rohrstück 21 eine zentrale Bohrung 22 als Kühlmittelkanal auf. Um die zentrale Bohrung herum sind vier Aerosolkanäle 23 angeordnet. Das Rohrstück 21 endet in einer Anschlussdichtung 24, an deren gegenüberliegender Seite eine Injektorlanze 25 für das Kühlmittel angeschlossen ist. Die Lanze 25 ist an ihrer Spitze mit einer axial abdichtenden Dichtung 26 versehen.

Die Anschlussdichtung 24 weist außerdem Austrittsöffnungen 27 für das Aerosol auf.

Fig. 5a zeigt einen Spiralbohrer 30, in dessen Innerem Kanäle 31 für Aerosol angeordnet sind, die außerhalb eines zentralen Kanals 32 für ein Kühlmittel angeordnet sind, wie Fig. 5b verdeutlicht. Die Kanäle 31, 32 sind zu getrennten Austrittsöffnungen 33 für das Aerosol und 34 für das Kühlmittel geführt. Es kommt hier also erst auf der Außenseite der Spitze des Bohrers 30 zu einer Vermischung des Aerosols mit dem Kühlmittel.

## Patentansprüche

1. Verfahren zur Kühlung von Aerosolen wobei, das Aerosol (1) zunächst durch ein flüssiges Kühlmedium (2) indirekt durch Hindurchleiten des Aerosols (1) und des Kühlmediums (2) in unmittelbar benachbarten Führungen (6, 10, 12) gekühlt wird, **dadurch gekennzeichnet, dass** danach eine Vermischung des Aerosols (1) mit dem Kühlmedium (2) erfolgt.

2. Verfahren nach Anspruch 1, **dadurch gekennzeichnet, dass** das Kühlmedium (2) in mindestens eine Kühlleitung (6) eingespeist wird, die innerhalb einer Aerosolführung (10) verläuft, und am Ende der Aerosolführung (10) das Aerosol (1) mit dem Kühlmedium (2) vermischt wird.

3. Verfahren nach Anspruch 2, **dadurch gekennzeichnet, dass** das Kühlmedium (2) in zwei Kühlleitungen (6) eingespeist wird, die innerhalb eines Aerosolrohres (16) oder -schlauches (13) verlaufen.

4. Verfahren nach einem der Ansprüche 1 bis 3, **dadurch gekennzeichnet, dass** das Aerosol (1) und das Kühlmedium (2) mittels einer Expansionsdüse (13) vermischt werden.

5. Verfahren nach einem der Ansprüche 1 bis 3, **dadurch gekennzeichnet, dass** das Aerosol (1) und das Kühlmedium (2) in einem Werkzeugspanner (17) einer Werkzeugmaschine miteinander vermischt werden.

6. Verfahren nach einem der Ansprüche 1 bis 5, **dadurch gekennzeichnet, dass** das Aerosol (1) und das Kühlmedium (2) mittels eines in einen Werkzeughalter einsetzbaren Übergaberohres (20) mit benachbarten Kanälen (22, 23) für das Aerosol (1) und das Kühlmittel (2) getrennt an ein Werkzeug übergeben werden.

7. Verfahren nach einem der Ansprüche 1 bis 6, **dadurch gekennzeichnet, dass** das Kühlmittel (2) und das Aerosol (1) in benachbarten Kanälen (31, 32) durch ein Bohr- oder Fräswerkzeug (30) hindurchgeführt werden.

8. Verfahren nach einem der Ansprüche 1 bis 7, **dadurch gekennzeichnet, dass** als Kühlmedium (2) flüssiges CO2 oder flüssiger Stickstoff eingesetzt werden.

## Claims

1. Method of cooling aerosols, in which the aerosol (1) is first cooled indirectly by a liquid coolant (2) by passing the aerosol (1) and the coolant (2) through in directly adjacent ducts (6, 10, 12), **characterised in that** the aerosol (1) is subsequently mixed with the coolant (2).

2. Method according to claim 1, **characterised in that** the coolant (2) is fed into at least one cooling line (6) extending within an aerosol duct (10) and the aerosol (1) is mixed with the coolant (2) at the end of the aerosol duct (10).

3. Method according to claim 2, **characterised in that** the coolant (2) is fed into two cooling lines (6) extending within an aerosol pipe (16) or hose (13).

4. Method according to one of claims 1 to 3, **characterised in that** the aerosol (1) and the coolant (2) are mixed by means of an expansion nozzle (13).

5. Method according to one of claims 1 to 3, **characterised in that** the aerosol (1) and the coolant (2) are mixed together in a tool holder (17) of a machine tool.

6. Method according to one of claims 1 to 5, **characterised in that** the aerosol (1) and the coolant (2) are transferred separately to a tool by means of a transfer pipe (20) with adjacent channels (22, 23) for the aerosol (1) and the coolant (2) that can be inserted into a tool holder.

7. Method according to one of claims 1 to 6, **characterised in that** the coolant (2) and the aerosol (1) are passed through a drilling or milling tool (30) in adjacent channels (31, 32).

8. Method according to one of claims 1 to 7, **characterised in that** liquid CO₂ or liquid nitrogen is used as the coolant (2).

## Revendications

1. Procédé de refroidissement d'aérosols, dans lequel l'aérosol (1) est tout d'abord refroidi indirectement par un agent de refroidissement liquide (2) en faisant passer l'aérosol (1) et l'agent de refroidissement (2) dans des conduites directement adjacentes (6, 10, 12), **caractérisé en ce qu'**un mélange de l'aérosol (1) avec l'agent de refroidissement (2) est ensuite effectué.

2. Procédé selon la revendication 1, **caractérisé en ce que** l'agent de refroidissement (2) est introduit dans au moins une conduite de refroidissement (6), qui s'étend à l'intérieur d'une conduite d'aérosol (10), et à l'extrémité de la conduite d'aérosol (10), l'aérosol (1) est mélangé avec l'agent de refroidissement (2).

3. Procédé selon la revendication 2, **caractérisé en ce que** l'agent de refroidissement (2) est introduit dans deux conduites de refroidissement (6), qui s'étendent à l'intérieur d'un conduit (16) ou tuyau d'aérosol (13).

4. Procédé selon l'une des revendications 1 à 3, **caractérisé en ce que** l'aérosol (1) et l'agent de refroidissement (2) sont mélangés au moyen d'un divergent (13).

5. Procédé selon l'une des revendications 1 à 3, **caractérisé en ce que** l'aérosol (1) et l'agent de refroidissement (2) sont mélangés ensemble dans un porte-outil (17) d'une machine-outil.

6. Procédé selon l'une des revendications 1 à 5, **caractérisé en ce que** l'aérosol (1) et l'agent de refroidissement (2) sont transférés séparément à un outil au moyen d'un conduit de transfert (20), insérable dans un porte-outil, comportant des canaux adjacents (22, 23) pour l'aérosol (1) et l'agent de refroidissement (2).

7. Procédé selon l'une des revendications 1 à 6, **caractérisé en ce que** l'agent de refroidissement (2) et l'aérosol (1) dans les canaux adjacents (31, 32) passent à travers un outil de perçage ou de fraisage (30).

8. Procédé selon l'une des revendications 1 à 7, **caractérisé en ce que** du CO2 liquide ou de l'azote liquide sont utilisés comme agent de refroidissement (2).
